## Europäisches Patentamt
## European Patent Office
## Office européen des brevets

(11) Veröffentlichungsnummer: **0 327 699**
**A2**

## (12) EUROPÄISCHE PATENTANMELDUNG

(21) Anmeldenummer: 88120247.7

(22) Anmeldetag: 05.12.88

(51) Int. Cl.⁴: **C08L 101/00 , C08L 77/00 ,**
**//(C08L101/00,23:36),**
**(C08L77/00,23:36)**

(30) Priorität: **11.02.88 DE 3804184**

(43) Veröffentlichungstag der Anmeldung:
**16.08.89 Patentblatt 89/33**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Neugebauer, Wolfgang, Dr.**
**Karl-Leisner-Strasse 3**
**D-4408 Dülmen-Merfeld(DE)**
Erfinder: **Mügge, Joachim, Dr.**
**Droste-Hülshoff-Strasse 17**
**D-4358 Haltern(DE)**
Erfinder: **Schlobohm, Michael, Dr.**
**Lipper Weg 195**
**D-4370 Marl(DE)**

(54) **Formmassen auf Basis von thermoplastisch verarbeitbaren, funktionalisierten, olefinischen Polymeren und Polykondensaten.**

(57) Ziel der Erfindung war es, die (Kerb)-Schlagzähigkeit von Polykondensaten durch Zusatz von leicht zugänglichen Polymeren zu verbessern.

Die gefundenen Formmassen enthalten ein durch Mischen in der Schmelze entstandenes Gemisch aus funktionalisierten olefinischen Polymeren und Polykondensaten.

Die neuen Formmassen eignen sich insbesondere zur Herstellung von Formteilen für den Einsatz im Automobil- und Sportartikelsektor.

EP 0 327 699 A2

**Formmassen auf Basis von thermoplastisch verarbeitbaren, funktionalisierten, olefinischen Polymeren und Polykondensaten**

Die Erfindung betrifft Formmassen auf Basis von thermoplastisch verarbeitbaren, funktionalisierten olefinischen Polymeren und Polykondensaten.

Polykondensate wie z. B. Polyamide, Polyester, Polycarbonate sowie Polyesteramide und Polyestercarbonate sind bekannte und bewährte Konstruktionswerkstoffe, die sich nach Spritzgieß- oder Extrusionsverfahren verarbeiten lassen.

Für bestimmte Anwendungen, insbesondere für den Einsatz im Automobil-und Sportartikelsektor, ist man daran interessiert, die (Kerb)-Schlagzähigkeit im spritzfrischen Zustand und besonders bei tiefen Temperaturen zu verbessern.

Es ist bekannt, daß man Polykondensate mit zähen Elastomeren sowie mit thermoplastischen Polyolefinen vermischen kann, wobei sich eine zweite, im Polykondensat dispergierte Phase bildet. Eine Verbesserung der Kerbschlagzähigkeit läßt sich jedoch nur dann erzielen, wenn die zugesetzten Polymeren eine gewisse Mindestverträglichkeit mit dem Polykondensat aufweisen. Eine solche Verträglichkeit wird z. B. durch funktionelle Gruppen erreicht, die imstande sind, chemische Bindungen mit dem Polykondensat einzugehen. Um in solchen Formmassen sowohl eine gute Verträglichkeit als auch eine Verbesserung der Kerbschlagzähigkeit zu erreichen, ist es in der Regel erforderlich, spezielle Zusatzpolymere unter Copolymerisation ausgewählter, die Verträglichkeit verbessernder Comonomerer herzustellen. Eine solche Synthese ist aufwendig und kostenintensiv.

Wegen dieser Probleme wird in der Praxis bei der Herstellung solcher Formmassen ein zweiter Weg beschritten: Man greift auf die in großer Menge und Vielfalt verfügbaren olefinischen Polymeren, wie z. B. Polyethylen oder Ethylen-Propylen-Dien-Copolymere, zurück und führt nachträglich funktionelle Gruppen in diese Polymeren ein.

Eine Ausführungsform besteht in der Pfropfung von Polyolefinen und olefinischen Elastomeren, wie z. B. EP(D)M-Kautschuken oder hydrierten Styrol-Butadien-Blockcopolymeren, mit monomeren alpha-beta-ungesättigten Carboxylderivaten, wie z. B. Maleinsäure(anhydrid), Fumarsäure, Acrylsäure, Methacrylsäure und ihren Estern.

Aus der DE-AS 26 22 973 sind thermoplastische Massen aus Polyamiden mit einem Molekulargewicht von mindestens 5 000 und einer weiteren Polymerkomponente, die entweder durch Pfropfung eines Kautschukes oder durch Copolymerisation eines Gemisches verschiedener Monomeren erhalten wird, bekannt.

Die bisher aus dem Stand der Technik bekannten Wege sind noch nicht zufriedenstellend. Ziel der vorliegenden Erfindung war es daher, die (Kerb)-Schlagzähigkeit von Polykondensaten durch Zusatz von leicht zugänglichen Polymeren zu verbessern.

Es wurden jetzt Formmassen gefunden, die sich durch ein merklich verbessertes Kerbschlagniveau auszeichnen. Diese enthalten als wesentliche Komponente ein durch Schmelzemischen erhaltenes Gemisch aus 4 bis 40, insbesondere 5 bis 25, Gewichtsteilen eines funktionalisierten olefinischen Polymeren und 96 bis 60, insbesondere 95 bis 75, Gewichtsteilen eines Polykondensats.

Das funktionalisierte olefinische Polymer und ein Verfahren zu seiner Herstellung sind Gegenstand einer Anmeldung des gleichen Patentinhabers vom gleichen Tage mit dem Titel "Funktionalisierte olefinische Polymere und Verfahren zu ihrer Herstellung". Es handelt sich um das Reaktionsprodukt, das bei der Umsetzung eines olefinischen Polymeren mit Asparaginsäure bzw. einem Asparaginsäurederivat bei erhöhter Temperatur in der Schmelze erhalten wird. Das olefinische Polymere ist ein Polymerisat auf Basis mindestens eines Monomeren aus der Gruppe der Olefine, Diene und vinylaromatischen Verbindungen.

Im folgenden sollen die erfindungsgemäßen Formmassen detailliert beschrieben werden. Als olefinische Polymere kommen infrage:

I. Polyalkenylene, die durch ringöffnende Polymerisation von Cycloolefinen mit 5 - 12 C-Atomen erhalten werden, wie Polypentenylene, Polydodecenylene und inbesondere Polyoctenylene (vgl. K. J. Ivin, T. Sagusa "Ring-Opening Polymerization" Vol. 1, Elsevier Appl. Sci. Publishers, London, insbesondere Seite 121 - 183, (1984).

Bevorzugt werden Polyoctenylene mit einer Viskositätszahl von 50 bis 350 ml/g, insbesondere 80 bis 160 ml/g, bestimmt an einer 0,1 %igen toluolischen Lösung, und einem trans-Doppelbindungsanteil von 55 bis 95 %, insbesondere 75 bis 85 %.

II. EPM-Kautschuk wird in bekannter Weise durch Polymerisation eines Gemisches aus 25 - 75 % Ethylen und 75 - 25 % Propylen in Gegenwart eines Ziegler-Natta-Katalysators, wie z. B. Diethylaluminiumchlorid, hergestellt.

EPDM-Kautschuk wird in analoger Weise durch Polymerisation eines Gemisches aus
mehr als 25 % Ethylen,
mehr als 25 % Propylen und
1 - 10 %, insbesondere 1 - 3 %, eines Diens hergestellt.

Dieses Dien sollte nicht konjugiert sein. Vorzugsweise handelt es sich um Hexadien-1,4, Dicyclopentadien und insbesondere 5-Ethylidennorbornen-2 (vgl. Kirk-Othmer "Encyclopedia of Chemical Technology" 3rd. ed. Vol. 8, p. 492 - 500 (1979).

    III. Polyethylen und Polypropylen

    IV. Polymere konjugierter Diene wie Polybutadien, Polyisopren und Poly(2,3-dimethylbutadien)

    V. Butadien-Styrol-Copolymere

Der Styrolanteil ist nicht kritisch. Er kann zwischen 0 % (vgl. IV.) und 100 % (vgl. VI.) liegen. Sowohl Block-, Pfropf- als auch statistische Copolymere sind möglich.

    VI. Polystyrol

Als Polykondensat kommen in erster Linie Polyamide, Polyester, Polycarbonate und die daraus abgeleiteten gemischten Typen wie Polyesteramide, Polyestercarbonate sowie Blends aus mehreren solcher Polymerer in Betracht. Der Anteil des olefinischen Polymeren liegt dabei zwischen 4 und 40 Gew.-%, der des Polykondensats zwischen 96 und 60 Gew.-%. Bevorzugt wird in den Bereichen 5 bis 25 Gew.-% bzw. 95 bis 75 Gew.-% gearbeitet.

Als Polyamide kommen Homo- und Copolymere in Frage, die vorzugsweise ausschließlich aliphatischer Struktur sind. Insbesondere seien hier die 6-, 46-, 66-, 612-, 11- und 12-Polyamide aufgeführt. Geeignet sind aber auch gemischte aliphatisch-aromatische Copolyamide (vgl. US-PSS 2 071 250, 2 071 251, 2 130 523, 2 130 948, 2 241 322, 2 312 966, 2 512 606, 3 393 210; Kirk-Othmer, Encyclopedia of chemical technology, Vol. 18, John-Wiley & Sons (1982), Seiten 328 bis 435). Das Zahlenmittel des Molekulargewichtes der Polyamide sollte über 5 000, vorzugsweise über 10 000, liegen.

Geeignete Polyester leiten sich von aromatischen Dicarbonsäuren mit 8 bis 16 C-Atomen her, die zum Teil durch andere Dicarbonsäuren ersetzt sein können, sowie von aliphatischen, cycloaliphatischen oder aromatischen Diolen. Als aromatische Dicarbonsäuren kommen z. B. infrage Terephthalsäure, Isophthalsäure, Phthalsäure, Homophthalsäure, o-, m-, p-Phenylendiessigsäure, 2,6-, 2,7-, 1,5-, 1,4-Naphthalindicarbonsäure, Diphensäure, Diphenylether-4,4'-dicarbonsäure oder deren Mischungen; andere, in kleinerem Teil enthaltende Dicarbonsäuren sind z. B. Adipinsäure, Sebacinsäure oder Dodecandisäure. Die aliphatischen und cycloaliphatischen Diole sind z. B. Ethylenglykol, Trimethylenglykol, Tetramethylenglykol, Hexamethylenglykol, 1,4-Cyclohexandimethanol und Neopentylglykol; die aromatischen Diole sind Bisphenole aus der Reihe Hydrochinon, Resorcin, Bisphenol A, Bisphenol T, Tetramethylbisphenol A, 4,4'-Dihydroxybiphenyl u. a. Bevorzugte Polyester sind Polyethylenterephthalat, Polybutylenterephthalat und Poly(bisphenol A-isocoterephthalat).

Als Polycarbonate kommen insbesondere die aromatischen Typen in Frage, die dem Fachmann allgemein bekannt sind; vgl. z. B. Kirk-Othmer, Encyclopedia of chemical technology, Vol. 18, John-Wiley & Sons (1982), Seiten 479 bis 494. Sie werden durch Reaktion eines Bisphenols mit einer Carbonatvorstufe, wie Phosgen, einem Chlorkohlensäureester oder Kohlensäureester erhalten. Typische Bisphenole sind Bisphenol A, Bisphenol T, Tetramethylbisphenol A oder Tetramethylbisphenol S. Das bevorzugte Polycarbonat ist das Homopolymere, das sich von Bisphenol A herleitet.

Die Vereinigung der Polykondensate mit dem funktionalisierten olefinischen Polymeren erfolgt durch Mischen der beiden Schmelzen in einem gut knetenden Aggregat bei 190 bis 320 °C, vorzugsweise bei 220 bis 280 °C. Es ist vorteilhaft, die beiden Komponenten trocken vorzumischen und zu extrudieren oder das Polykondensat in die Schmelze des olefinischen Polymeren bzw. das olefinische Polymere in die Schmelze des Polykondensats zu dosieren.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu etwa 25 % und der aller übrigen Zusatzstoffe insgesamt bis zu 5 %, jeweils bezogen auf die gesamte Formmasse, betragen.

Als Verstärkungsmittel eignen sich besonders Glas- und Kohlenstofffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Die erhaltenen Formmassen lassen sich mit den für die Thermoplastverarbeitung üblichen Verfahren,

3

wie z. B. Spritzgießen und Extrusion, zu Formkörpern verarbeiten.

Die erfindungsgemäßen Formmassen zeichnen sich gegenüber den Produkten des Standes der Technik durch eine einfachere Herstellungsweise aus und besitzen eine hohe Zähigkeit sowohl im spritzfrischen Zustand als auch bei tiefen Temperaturen.

Die Kerbschlagzähigkeit ($a_K$) der Formmassen wurde nach DIN 53 453 an gespritzten Normkleinstäben mit Rechteckkerbe bei Raumtemperatur gemessen.

Die relative Viskosität $Eta_{rel}$ wurde mit einem Ubbelohde-Viskosimeter bei 25 °C gemessen. Man verwendete hierzu eine Lösung von 250 mg Polyamid in 50 ml m-Kresol.

Die Izod-Werte wurden nach ASTM D 256 bestimmt.

## Beispiel 1

100 Teile EPDM (BUNA® AP 437; Bunawerke Hüls AG) wurden auf einem Leistritz Doppelwellenextruder LSM 30.34 mit einem Temperaturprofil zwischen 200 und 280 °C extrudiert, während 2,0 Teile N-(2-Hydroxyethyl)asparaginsäuredibutylester (HAB) (erhältlich durch Michael-Addition von Ethanolamin an Maleinsäuredibutylester) in die Schmelze flüssig dosiert wurden. Zur Entfernung von entstandenem n-Butanol wurde ein Vakuum von 100 mbar angelegt. Der Strang wurde in Wasser gekühlt und granuliert. 5 g des erhaltenen funktionalisierten EPDM wurde 2 mal aus Toluol/Aceton umgefällt; im IR ist bei 1 700 cm$^{-1}$ eine deutliche Absorption sichtbar. Elementaranalyse: 0,072 % N (Theorie: 0,097 %).

20 Teile des funktionalisierten EPDM wurden auf der gleichen Maschine mit 80 Teilen PBTP (VESTODUR® 1000; Hüls AG) bei 250 °C und 100 UpM (= Umdrehungen pro Minute) compoundiert. Das erhaltene Granulat wurde 20 Stunden bei 200 °C im Ölpumpenvakuum nachbehandelt, anschließend zu Prüfkörpern verspritzt und der Kerbschlag nach DIN 53 453 bestimmt; siehe Tabelle.

## Vergleichsbeispiel A

· Analog zu Beispiel 1 wurde das entsprechende Compound hergestellt, jedoch mit unfunktionalisiertem BUNA® AP 437; siehe Tabelle.

## Beispiel 2

100 Teile Polyoctenylen (VESTENAMER® 8012; Hüls AG) wurden mit 2 Teilen Asparaginsäure vorgemischt und auf der gleichen Maschine wie in Beispiel 1 bei 290 °C Schmelzetemperatur extrudiert, gekühlt und granuliert. 5 g des erhaltenen funktionalisierten Polyoctenylens wurden 2 mal aus Toluol/Aceton umgefällt; im IR ist bei 1 700 cm$^{-1}$ eine starke Absorption sichtbar. Elementaranalyse: 0,19 % N (Theorie: 0,21 %).

20 Teile des funktionalisierten Polyoctenylens wurde auf der gleichen Maschine mit 80 Teilen Polyamid 12 ($Eta_{rel}$ = 2,06) bei 250 °C und 200 UpM compoundiert. Das erhaltene Granulat wurde zu Prüfkörpern verspritzt und der Kerbschlag nach DIN 53 453 und Izod (ASTM D 256/A) bestimmt; siehe Tabelle.

## Vergleichsbeispiel B

20 Teile unfunktionalisiertes VESTENAMER® 8012 wurden mit dem gleichen Polyamid 12, wie in Beispiel 2 beschrieben, unter den gleichen Bedingungen compoundiert, verspritzt und geprüft; siehe Tabelle.

## Beispiel 3

100 Teile HDPE (VESTOLEN® A 5042; Hüls AG) wurden analog zu Beispiel 2 mit 2 Teilen Asparaginsäure funktionalisiert und anschließend mit Polyamid 12 auf die in Beispiel 2 beschriebene Weise compoundiert; siehe Tabelle.

4

Vergleichsbeispiel C

Es wurde ein Compound analog zu Beispiel 3, jedoch mit unfunktionalisiertem VESTOLEN® A 5042 hergestellt; siehe Tabelle.

Beispiel 4

100 Teile EPDM (BUNA® AP 437; Bunawerke Hüls AG) wurden analog zu Beispiel 2 mit 2 Teilen Asparaginsäure funktionalisiert und anschließend mit Polyamid 12 auf die in Beispiel 2 beschriebene Weise compoundiert; siehe Tabelle.

Vergleichsbeispiel D

Analog zu Beispiel 4, jedoch ohne Funktionalisierung.

Tabelle

| Beispiel | Gewichtsteile Polykondensat | Gewichtsteile (Co)-Polymerisat | Gewichtsteile Funktionsalisierungsmittel | Kerbschlagzähigkeit nach DIN 53 453 $(kJ/m^3)$ | | | | Izod nach ASTM D 256 (J/m) |
|---|---|---|---|---|---|---|---|---|
| | | | | RT | 0 °C | -20 °C | -40 °C | |
| 1 | 80 PBTP | 20 EPDM | 0,4 HAB | 18 | 11 | 9 | 6 | |
| A | 80 PBTP | 20 EPDM | - | 4 | 3 | 3 | 3 | |
| 2 | 80 PA12 | 20 Polyoctenylen | 0,4 Asparaginsäure | o. Br. | o. Br. | 25 | 13 | 600 |
| B | 80 PA12 | 20 Polyoctenylen | - | 9 | 6 | 6 | 5 | |
| 3 | 80 PA12 | 20 HDPE | 0,4 Asparaginsäure | ang. | 31 | 16 | 8 | |
| C | 80 PA12 | 20 HDPE | - | 10 | 8 | 8 | 7 | |
| 4 | 80 PA12 | 20 EPDM | 0,4 Asparaginsäure | o. Br. | o. Br. | 29 | 15 | 820 |
| D | 80 PA12 | 20 EPDM | - | 9 | 7 | 7 | 6 | |

a) N-(2-Hydroxyethyl)asparaginsäuredibutylester

**Ansprüche**

1. Thermoplastische Formmassen, enthaltend ein durch Mischen in der Schmelze erhaltenes Gemisch aus

4 bis 40 Gewichtsteilen funktionalisierten olefinischen Polymeren, das durch Umsetzung von Asparaginsäure bzw. eines Asparaginsäurederivates mit einem Polymerisat auf Basis mindestens eines Monomeren aus der Gruppe der Olefine, Diene und vinylaromatischen Verbindungen in der Schmelze bei erhöhter Temperatur erhältlich ist,

und

96 bis 60 Gewichtsteilen Polykondensaten.

2. Formmassen nach Anspruch 1,

dadurch gekennzeichnet,

daß als Polykondensat ein Polyamid eingesetzt wird.

3. Formmassen nach Anspruch 2,

dadurch gekennzeichnet,

daß als Polyamid PA 6, PA 46, PA 66, PA 612, PA 11 und/oder PA 12 eingesetzt wird.

4. Formmassen nach Anspruch 3,

dadurch gekennzeichnet,

daß der Anteil der funktionalisierten olefinischen Polymeren 5 bis 25 Gewichtsteile und der Anteil der Polykondensate dementsprechend 95 bis 75 Gewichtsteile beträgt.